# EUROPEAN PATENT SPECIFICATION

(11) **EP 1 325 896 B1**
(45) Date of publication and mention of the grant of the patent: **20.09.2006**
(21) Application number: 02293046.5
(22) Date of filing: 10.12.2002
(51) Int. Cl.: C03B 40/04, C03B 13/00

(54) **Method and apparatus for producing single rolled sheets of glass**
Verfahren und Vorrichtung für die Herstellung von einzigen gewalzten Glassscheiben
Procédé et dispositif de production, à l'unité , de feuilles de verre laminé

(30) Priority: 11.12.2001 FR 0115963
(43) Date of publication of application: 09.07.2003
(73) Proprietor: Eurokera, 77640 Jouarre (FR)
(72) Inventor: Fredholm, Allan, 77850 Hericy (FR)
(74) Representative: Le Roux, Martine

(56) References cited:
- GB-A- 1 429 343
- JP-A- 9 221 330
- US-A- 4 251 254
- PATENT ABSTRACTS OF JAPAN vol. 018, no. 525 (C-1257), 5 October 1994 (1994-10-05) & JP 06 183757 A (OLYMPUS OPTICAL CO LTD), 5 July 1994 (1994-07-05)
- PATENT ABSTRACTS OF JAPAN vol. 1995, no. 03, 28 April 1995 (1995-04-28) & JP 06 340430 A (CANON INC), 13 December 1994 (1994-12-13)

## Description

The invention relates to a method of producing single rolled sheets of glass. It also relates to apparatus for producing such single rolled sheets of glass. Said apparatus is suitable for implementing said method.

The sheets in question are known products: thin plates of glass obtained by rolling.

It is conventional practice to produce sheet glass continuously from a glass furnace delivering molten glass. Said sheet of glass is subsequently subdivided into individual sheets of desired shape and size. Depending on the characteristics of the glass in question and/or the surface quality required, it is possible to obtain said sheet glass by drawing directly from an orifice of appropriate shape or by rolling a stream of glass between a set of rollers. Such a known production method generally requires a glass furnace of large capacity that is capable of ensuring a continuous feed of glass. Said furnace must be capable of continuously delivering at least a minimum flow. The minimum flow is determined by the minimum stretching or rolling speed of the method in question and by the width of the desired sheets.

In certain contexts, only a small quantity of glass is required. It can thus be desired to produce a particular product on a small scale. It could also be necessary to change the composition of the glass frequently,.... In such contexts, a continuous method necessarily associated with a large supply of glass is neither easy nor advantageous to implement. It can be more effective to use a small capacity glass furnace in which it is easy to implement changes of composition.

Similarly, it can be desirable to produce individual sheets of glass directly rather than beginning by producing a continuous sheet, which needs subsequently to be split up. Such two-stage operations require manpower and are therefore expensive.

Other requirements include:
- the need to automate the production of individual sheets, as far as possible; and
- the need to control the production of sheets of glass carefully in certain circumstances, for example in order to avoid devitrification.

In the prior art, the following is described in particular:
- in French patent application FR-A-2 220 481, a method of shaping glass in which, in succession:
   · a mass of glass supported by a sheet of gas is given a shape that corresponds substantially to the desired final shape;
   · said supported mass of glass is cooled at a conditioning temperature at which it can be shaped by coming into contact with a solid surface without perceptible surface damage; and
   · said mass as conditioned in this way is shaped by a forming technique that implies contact with a solid surface.

That forming method was developed for obtaining a glass having at least one face presenting very high surface quality. It is described as being implemented discontinuously for making lenses and continuously for making strips.

In any event, the technical problem to which that document relates is the problem of the surface quality of at least one face of the formed glass, and in the method described, from the very first step thereof, the raw material is shaped in a manner that corresponds substantially to its intended final shape;
- in French patent application FR-A-2 735 562, both continuous and discontinuous fabrication of sheets of a glass, constituting precursor to glass ceramics. Said discontinuous fabrication consists in periodically feeding two rolling rollers with glass gobs (the length of each gob (drop) being substantially equal to the width of the desired sheet). Such a discontinuous method is not fully satisfactory in that:
   · its field of application is limited, with reference to the viscosity of the glass in question. It is difficult or even impossible to generate gobs using glass of viscosity of less than 300 Pascal seconds (Pa.s), *i.e.* 3000 poises;
   · in order to produce large sheets, i.e. wide sheets, it does not make optimum use of the mass of glass that is delivered (even when using glasses of viscosity greater than 300 Pa.s (3000 poises)).

In such a context, the inventors propose a method and associated apparatus that are particularly adapted to producing individual sheets of rolled glass.

Said method is implemented discontinuously and presents the advantages inherent to that type of implementation (see above) while nevertheless having a field of application that is particularly broad, given the viscosity of the glass in question (it is suitable for glasses of viscosity of less than 300 Pa.s (3000 poises)), and particularly suitable for producing sheets of glass of great width (said production is possible with glass of low viscosity (less than 300 Pa.s (3000 poises) and is optimized with glass of higher viscosity, in particular in the range 300 Pa.s to 400 Pa.s (3000 poises to 4000 poises)). In characteristic manner, said method comprises rolling a mass of molten glass that has previously been formed into a particular shape (a sausage shape) which does not correspond to the shape desired for the final sheet but which guarantees that rolling is implemented over a quantity of material that is almost constant over the entire length of the rolling rollers.

In a first aspect, the invention thus provides a method of producing single rolled sheets of glass, said method comprising:
· feeding a cavity of a mold with a determined quantity of molten glass;
· maintaining said molten glass in said cavity in such a manner that said molten glass conforms to the shape of said cavity; said shape of said cavity being adapted to confer on said molten glass an elongate shape of cross-section that is of substantially constant area;
   said feeding and said maintaining being implemented under conditions such that said molten glass does not wet the inside surface of said cavity;
· transferring at least a portion of said molten glass from said cavity to a rolling station comprising at least one set of rollers; and
· rolling said transferred molten glass by means of said at least one set of rollers,
said transferring and said rolling being implemented such that an almost constant quantity of the shaped material is rolled over the entire length of rolling.

In characteristic manner in the context of said method of the invention, the molten glass is not transferred directly and continuously to the rolling station. A predetermined quantity of said molten glass is formatted in intermediate manner. This intermediate formatting step is implemented without damaging the surface of said glass insofar as any contact between said glass and the inside surface of the mold cavity is avoided. This intermediate formatting step gives the mass of glass in question substantially the shape of a sausage, and ideally a right cylindrical shape.

This formatting step can also be particularly opportune in circumstances where the glass is advantageously cooled in very progressive manner and/or in circumstances where the shape of the delivered molten glass needs to be fully controlled. In particular, it makes it possible to generate and use gobs of shapes having a high ratio of length over diameter, said diameter being fully controlled in circumstances where sheets of large dimensions are to be produced. At present, as mentioned above, systems for delivering gobs are restricted concerning said length/diameter ratio and control over said diameter.

This formatting step is implemented on molten glass delivered from a suitable source of appropriate volume, such as a "day" tank or a furnace operating continuously. Said source can deliver at least one flow of glass (where such a flow of glass is, in conventional manner, interrupted by cutting means or by vertical movements of a mechanical part) or at least one glass gob.

The method of the invention can be implemented using discontinuous masses of glass of greater or lesser viscosity.

Various techniques can be used to ensure non-wetting of the inside surface of the mold cavity into which the molten glass is cast and maintained in intermediate manner.

In a first variant, the inside surface of the mold cavity is intrinsically not wettable by glass. It is made of a material that is not wettable by glass. In this variant, it is advantageous for the entire mold to be made of said material. In any event, at least the inside surface of the mold cavity is made of a material that is not wettable by molten glass. Said material which is not wettable by molten glass can consist of hexagonal boron nitride (BN), in particular.

In a second variant, which is not incompatible with the first, a film of gas is used between the inside surface of the mold cavity and the molten glass so as to avoid any contact. The gas used for forming and maintaining said film of gas can be delivered to said inside surface of said cavity *via* channels made through the thickness of the mold or *via* the open porosity of porous material constituting said mold. These two embodiments do not exclude each other and do not necessarily exclude other embodiments either. In particular, it is possible to devise means for delivering gas under pressure that are formed along said inside surface of the cavity.

Porous materials suitable for constituting molds and means for delivering gas to the inside surface of cavities in such molds include, in non-limiting manner: nickel, stainless steels, graphites, and ceramics.

The transfer of the formatted molten glass from the intermediate mold cavity to the rolling station can likewise be implemented in various ways adapted to a greater or lesser extent to the shape of the mold in question. Two such variants are described in detail below, but the invention is not limited thereto. Said transfer generally applies to all of the glass inserted into the mold cavity. Nevertheless, it could apply to a portion only thereof.

In a first variant, the mold presenting a cavity which is elongate in shape is constituted by at least two portions that are capable of being separated for (suddenly) delivering the molten glass contained therein. Said mold is positioned over a pair of rollers (of the rolling station) and the molten glass is transferred from said mold to said rollers by separating at least two component portions of said mold, at least in part. The mold in question can thus present two portions and can open with said two portions separating in part or completely so as to deliver the molten glass suddenly.

In a second variant, the mold cavity is elongate in shape; said mold is positioned at a level higher than that of the pair of rollers (of the rolling station) and the glass is transferred from said elongate mold cavity to between said rollers by tilting said mold about an axis parallel to its long dimension. This seeks to minimize the time required for transfer, ....

Mention is made above of a pair of rollers of the rolling station. This might be the only pair of rollers of said rolling station and it can be capable of generating the sheet of plate glass directly at the desired thickness, or else it might be the first pair of rollers of the laminating station which has at least two pairs. In general, said rolling station is likely to implement a plurality of rolling operations in succession in order to produce sheets of glass of the desired thickness. In any event, the rolling operation implemented in the method of the invention is an operation which is known per se.

To implement the two variant transfers described above, and more generally to implement said transfer of the glass, from the intermediate mold to the rolling station, said mold is advantageously located in the immediate vicinity of said rolling station. Thus, said transfer is advantageously implemented without significantly displacing said mold. Nevertheless, it would not go beyond the ambit of the invention to implement a mold feeding zone and a rolling zone that are entirely separate; this would require the glass to be transferred while packaged in said mold from its feeding station to its rolling station.

At the outlet from the rolling, it is possible to obtain the desired flat sheet of glass directly.

It is also possible to obtain an intermediate product capable of being worked subsequently, in particular by molding, by adjusting the rolling speed to a value that is sufficiently high. In the context of implementing the method of the invention discontinuously, obtaining such an intermediate product requires glass to be delivered at a rate that is well below that which would be required if the method were to be operated continuously. Thus, the method of the invention can include, in addition to the above-specified steps, a step of molding the flat sheet of glass obtained by rolling.

Said sheet which is still soft and malleable can thus be placed on a mold and shaped to match said mold, e.g. by being formed by suction.

The person skilled in the art will already have understood the advantage of the method of the invention. It is described above in terms of a single mold. Nevertheless, it will readily be understood that when implemented on an industrial scale a plurality of molds can be used. Thus, a series of molds can be used with each mold being positioned in succession to receive the appropriate quantity of molten glass.

The invention is described below in its second aspect, its apparatus aspect. Original apparatus is proposed for producing single rolled sheets of glass, said apparatus comprising:
· a delivery device for delivering molten glass intermittently;
· a mold presenting a cavity for receiving and containing said molten glass delivered by said delivery device, the shape of said cavity being adapted to confer on said molten glass an elongate shape of cross-section that presents substantially constant area and the inside surface of said cavity not being wetted by said molten glass; said mold being fitted with means for transferring at least a portion of said molten glass from said cavity to a rolling station; and
· said rolling station comprising at least one set of rollers between which said transferred molten glass is rolled into a sheet of glass,
said means for transferring and said at least one set or rollers (30+32) being adapted for implementation of the rolling over an almost constant quantity of molten glass (82) all along the entire length of rolling.

In characteristic manner, a mold or receptacle for glass delivered by the delivery device is used between said delivery device and the rolling station. This can be referred to as a "buffer" receptacle suitable for conditioning the delivered glass in such a manner that use thereof in subsequent rolling is optimized. Said mold can be a single mold or it can be one of the elements in a set of molds, each of said elements being suitable for being fed in succession with glass and then unloaded, ....

The inside surface of said mold cavity is not wettable by molten glass. This is an intrinsic quality of the material constituting said inside surface and/or the result of means implemented within the mold.

In a first variant, at least the inside surface of the mold cavity (or indeed the entire mold) is made of a material that is not wettable by molten glass (such as hexagonal boron nitride). In a second variant that does not exclude the first, said mold includes in its structure and/or is associated with means suitable for forming a film of gas on its inside surface, said film of gas preventing any contact between said surface and the glass that is to be transferred and maintained in said cavity. In this second variant, the mold can be connected to a source of gas under pressure and said gas can be forced through the thickness of said mold via channels formed in said thickness or via the open porosity of the material constituting said mold (e.g. nickel, a stainless steel, a graphite, a ceramic). Said gas need not necessarily pass through the thickness of the mold, it could be delivered by means arranged along the inside surface of the mold cavity.

Said mold is suitable for transferring the glass to the rolling station. For this purpose, it is capable in particular of opening, of splitting into a plurality of pieces, or of tipping.

In a first variant, said mold is constituted by at least two portions capable of being separated at least in part, and it is positioned over the rolling station. The molten glass thus drops directly between rollers of said rolling station by said mold being opened fully or in part.

In a second variant, the mold is positioned at a level higher than that of a pair of rollers of the rolling station (the only pair or one of the pairs constituting the rolling station), it presents a cavity that is elongate in shape, and it is fitted with means for enabling it to tilt about an axis parallel to its long dimension. It delivers the glass by tilting. It delivers glass at a high delivery rate insofar as delivery takes place over a significant length.

In conventional manner, the rolling station comprises at least one set of rollers.

The apparatus of the invention can further comprise, downstream from said rolling station, a molding device, and in particular a device for forming by suction.

The invention is described below in non-limiting manner in both its method and its apparatus aspects with reference to the accompanying figures, in which:
- Figure 1 is a diagram showing a variant implementation of the essential intermediate step of the method of the invention together with the essential means, the mold or receptacle, of the associated apparatus;
- Figure 2 is a plan view of another variant of said essential means, mold or receptacle, of the apparatus of the invention;
- Figure 3 is a section view on line III-III of Figure 2;
- Figure 4 is a section view on line IV-IV of Figure 2;
- Figure 5 is a section view showing another variant of said essential means of the apparatus of the invention;
- Figure 6A is a diagrammatic section view showing the Figure 3 mold being fed with molten glass (a flow of glass);
- Figure 6B is a diagrammatic section view showing the glass being transferred from the mold of Figures 3 and 6A;
- Figure 7A is a diagrammatic section view showing the Figure 5 mold being fed with molten glass (glass gob);
- Figure 7B is a diagrammatic section view showing how the glass is transferred from the mold of Figures 5 and 7A; and
- Figures 8A and 8B are diagrammatic side and face views respectively showing the glass from one of Figures 6B and 7B passing through a pair of rollers.

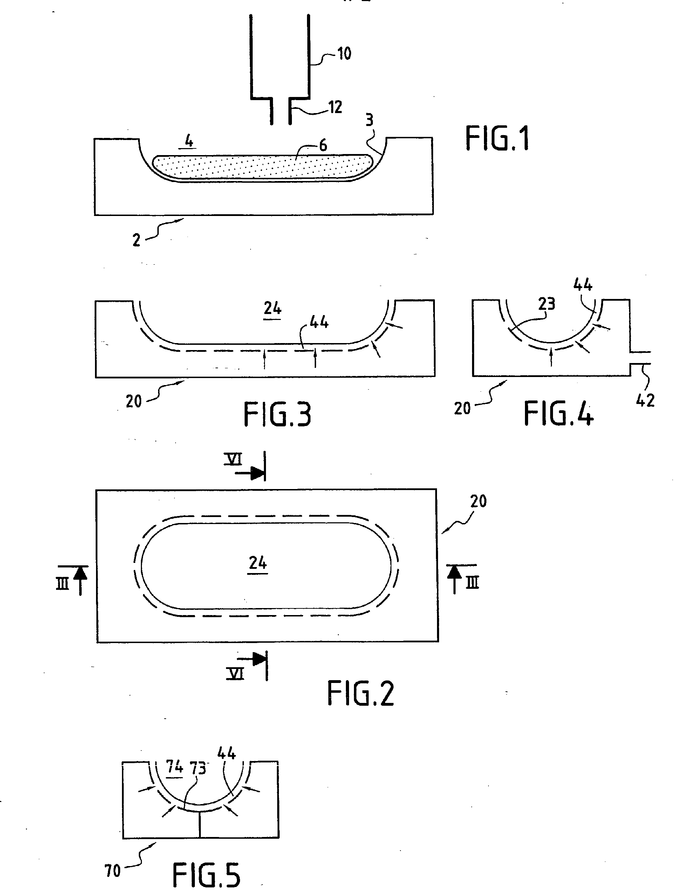

Figure 1 shows a given volume of molten glass 6 maintained in the cavity 4 of the intermediate mold 2. Said molten glass 6 has been taken from the tank 10 of a furnace (not shown) via a tubular outlet 12. Said intermediate mold 2 is the key of the apparatus of the invention. The glass 6 is maintained therein temporarily and it is formatted therein (in an elongate shape of cross-section that presents substantially constant area), without making any contact with the inside surface 3 of the cavity 4. In the variant shown, said inside surface 3 is not wettable by said glass 6.

Figures 2, 3, and 4 show a mold 20 having a cavity 24 of elongate shape. Said mold 20 is made of a refractory material that is porous thus enabling it to be pressurized so as to form a film of gas 44 on the inside surface 23 of its cavity 24. Said film of gas 44 is capable of preventing any contact between said inside surface 23 and the glass cast into and maintained within said cavity 24.

The gas used for forming said film of gas 24 is delivered from an external source to the inlet 42 of the mold 20. Said gas passes through the mold via the open porosity of its material and generates the film of gas 24 on the exposed inside surface 23 of the cavity 24 of the mold 20. By way of example, the gas can be air.

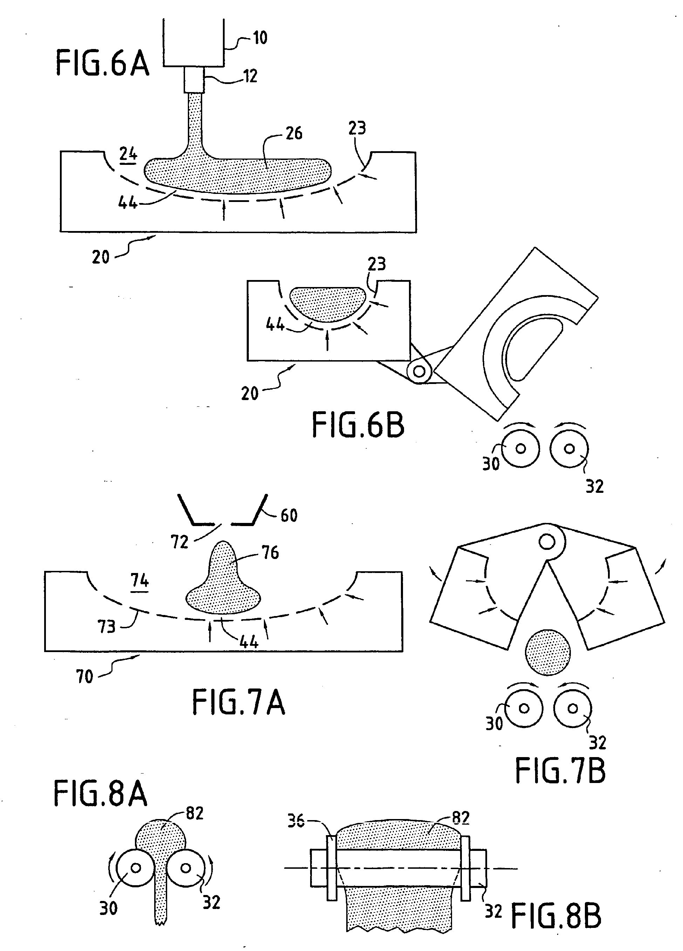

Figure 5 shows a mold 70 which has a cavity 74. Said mold 70 is likewise made of a material that is porous so it is likewise possible to generate a film of gas 44 on the inside surface 73 of its cavity 74 by injecting said gas into the structure of said mold 70. The mold 70 is also elongate in shape (see Figure 7A). It is divided into two portions along its longitudinal axis (its long dimension). Such an arrangement makes it possible to release the glass contained in said mold 70 directly onto the rollers of the rolling station (see Figure 7B).

Figure 6A is a diagram showing the molten glass 26 delivered into the mold 20 from the tubular outlet 12 of the tank 10 of a furnace. Once the desired quantity of molten glass 26 has been received in the cavity 24 of said mold 20, the casting flow is interrupted in conventional manner. The glass can then be maintained in said cavity 24 for a length of time that is sufficient for it to become uniform throughout its mass, particularly in terms of temperature. Said glass is "sausage-shaped" and is maintained more exactly on the film of gas 44.

Figure 6B shows the following step of the method. The mold 20 in Figure 6A is tilted about an axis parallel to its long dimension. It thus tips the molten glass 26 between the rollers 30 and 32 of the rolling station. The arrows show the direction of rotation of each of said rollers. They naturally turn in opposite directions.

Figure 7A is a diagram showing a gob of molten glass 76 delivered into the cavity 74 of the mold 70 which is itself capable of opening so as to deliver said gob 76 to the rollers 30 and 32 of the rolling station (see Figure 7B). The gob 76 runs out through an orifice 72 of a tank 60 in conventional manner. It is formed by being cut off, in conventional manner. It does not come into contact with the inside surface 73 of the cavity 74 because of the film of gas 44.

The mold 70 is thus a two-part mold. Figure 7B shows its opening to deliver the gob 76 from above to the rollers 30 and 32 of the rolling station. In this implementation of the method of the invention, the gob 76 (which has acquired an advantageous shape in the mold 70) is transferred from the cavity 74 to the rollers 30 and 32 almost instantaneously.

Figures 8A and 8B are a side view and a face view showing the molten glass 82 transferred from the intermediate mold - mold 2, 20, or 70 of Figures 1, 6B, or 7B, respectively - in the process of being rolled between a pair of rollers 30 and 32. The rolling operation is optimized relative to the width of the sheet produced.

The invention is illustrated by the following examples.

### Example 1

A photochromic glass that devitrifies at about 1000 poises was delivered from a melting unit via a feed tube into a two-part mold cavity made of porous stainless steel. Said mold was of the same type as the mold 70 shown in Figures 5, 7A, and 7B. The maximum inside dimension of its cavity was about 120 millimeters (mm). The gas for pressurizing the thickness of said mold and generating the protective film was air. The glass was delivered to the mold at a rate of 100 kilograms per hour (kg/h). On delivery its viscosity was about 700 poises.

The mold was temperature controlled.

About 400 grams (g) of glass was delivered into said mold. Once feed had been stopped, the glass was left to stabilize in the mold to a mean viscosity of about 3000 poises.

The mold and its content were then placed above a pair of rollers (made of glass) having the capacity to roll 150 mm wide sheets of glass.

The thermally conditioned glass was delivered to said rollers while they were in rotation by opening the mold (as shown diagrammatically in Figure 7B).

The glass was thus rolled into sheets that were 150 mm wide, and 2.5 mm thick. A throughput of about four sheets per minute was obtained.

Attempts at rolling that glass continuously had failed because of its high tendency to devitrify.

### Example 2

A glass constituting a precursor of a glass ceramic was melted and delivered to a gob-forming device that delivers molten glass gobs weighing 5 kg, having viscosity of about 350 poises, at a rate of about six gobs per minute. The glass gobs were delivered to a porous two-part mold for conditioning to a stable uniform temperature. The mold was made of graphite and pressurized using nitrogen. This generated a film of gas on the inside surface of the mold, as shown in Figure 5.

Once the thermal state of the glass had been stabilized, the mold was opened and the glass was delivered to the rollers as in Example 1. The glass was rolled to a thickness of about 4 mm. The flat sheet formed in this way was then transferred to a mold in which it was shaped by vacuum forming.

Sheets having dimensions of about 600 mm x 750 mm were produced by those means. Producing such sheets using a continuous process would consume much more glass. In addition, with a conventional gob loading system, it is much more difficult or even impossible to obtain a very high gob-lengthening ratio while still controlling the shape of said gob.

## Claims

1. A method of producing single rolled sheets of glass, the method comprising:
· feeding a cavity (4; 24; 74) of a mold (2; 20; 70) with a determined quantity of molten glass (6; 26; 76);
· maintaining said molten glass (6; 26; 76) in said cavity (4; 24; 74) in such a manner that said molten glass (6; 26; 76) conforms to the shape of said cavity (4; 24; 74); said shape of said cavity (4; 24; 74) being adapted to confer on said molten glass (6; 26; 76) an elongate shape of cross-section that is of substantially constant area;
said feeding and said maintaining being implemented under conditions such that said molten glass (6; 26; 76) does not wet the inside surface (3; 23; 73) of said cavity (4; 24; 74);
· transferring at least a portion of said molten glass (6; 26; 76) from said cavity (4; 24; 74) to a rolling station comprising at least one set of rollers (30 + 32); and
· rolling said transferred molten glass (82) by means of said at least one set of rollers (30 + 32) ;
said transferring and said rolling being implemented such that an almost constant quantity of the shaped material is rolled over the entire length of rolling.

2. The method according to claim 1, **characterized in that** said cavity (24; 74) is fed with at least one flow of molten glass (26) or with at least one glass gob (76).

3. The method according to claim 1 or claim 2, **characterized in that** at least the inside surface (3) of said cavity (4) is made of a material that is not wettable by said molten glass (6).

4. The method according to claim 3, **characterized in that** said material consists of hexagonal boron nitride (BN).

5. The method according to any one of claims 1 to 4, **characterized in that** a film of gas (44) is provided between the inside surface (23; 73) of said cavity (24; 74) and said molten glass (26; 76).

6. The method according to claim 5, **characterized in that** the gas suitable for forming said film of gas (44) is delivered *via* channels provided in the thickness of said mold (20; 70) or *via* the open pores of a porous material constituting said mold (20; 70).

7. The method according to claim 6, **characterized in that** said porous material constituting said mold (20; 70) is selected from: nickel; stainless steels; graphites; and ceramics.

8. The method according to any one of claims 1 to 7, **characterized in that** said mold (70) is constituted by at least two portions suitable for being separated at least in part, **in that** said mold (70) is positioned above a pair of rollers (30 + 32), and **in that** the molten glass (76) held in the cavity (74) of said mold (70) is transferred towards said rollers (30 + 32) by separating at least two of the component parts of said mold (70) at least in part.

9. The method according to any one of claims 1 to 7, **characterized in that** said cavity (24) of said mold (20) is elongate in shape, **in that** said mold (20) is positioned at a level higher than the level of a pair of rollers (30 + 32), and **in that** the molten glass (26) held in said cavity (24) of said mold (20) is transferred to said rollers (30 + 32) by tilting said mold (20) about an axis parallel to its long direction.

10. The method according to any one of claims 1 to 9, **characterized in that** it further comprises:
· molding the resulting sheet of plate glass.

11. An apparatus for producing single rolled sheets of glass, the apparatus comprising:
· a delivery device (10 + 12; 60 + 72) for delivering molten glass (6; 26; 76) intermittently;
· a mold (2; 20; 70) presenting a cavity (4; 24; 74) for receiving and containing said molten glass (6; 26; 76) delivered by said delivery device (10 + 12; 60 + 72), said shape of said cavity (4; 24; 74) being adapted to confer on said molten glass (6; 26; 76) an elongate shape of cross-section that is of substantially constant area and the inside surface (3; 23; 73) of said cavity (4; 24; 74) not being wetted by said molten glass (6; 26; 76); said mold (2; 20, 70) being fitted with means for transferring at least a portion of said molten glass (6; 26; 76) from said cavity (4; 24; 74) to a rolling station; and
· said rolling station comprising at least one set of rollers (30 + 32) between which said transferred molten glass (82) is rolled into a sheet of glass ;
said means for transferring and said at least one set or rollers (30+32) being adapted for implementation of the rolling over an almost constant quantity of molten glass (82) all along the entire length of rolling.

12. The apparatus according to claim 11, **characterized in that** at least the inside surface (3) of said cavity (4) of said mold (2) is made of a material that is not wettable by said molten glass (6).

13. The apparatus according to claim 11 or claim 12, **characterized in that** said mold (20; 70) includes and/or is associated with means (42) suitable for forming a film of gas (44) on its inside surface (23; 73).

14. The apparatus according to claim 13, **characterized in that** said mold (20; 70) is connected to a source of gas under pressure, and **in that** said gas is forced through the thickness of said mold (20; 70) *via* channels formed in said thickness or *via* the open pores of a porous material constituting said mold (20; 70).

15. The apparatus according to claim 14, **characterized in that** said porous material constituting said mold (20; 70) is selected from: nickel; stainless steels; graphites; and ceramics.

16. The apparatus according to any one of claims 11 to 15, **characterized in that** said mold (70) is constituted by at least two portions suitable for being separated from each other at least in part for transferring the molten glass (76), and **in that** said mold is positioned over a pair of rollers (30 + 32) of the rolling station.

17. The apparatus according to any one of claims 11 to 15, **characterized in that** said mold (20) is positioned at a level higher than the level of a pair of rollers (30 + 32) of the rolling station, has a cavity (24) of elongate shape, and is fitted with means suitable for causing it to tilt about an axis parallel to its long dimension.

18. The apparatus according to any one of claims 11 to 17, **characterized in that** it further comprises:
· a device for molding the sheet of plate glass obtained from the rolling station.

## Patentansprüche

1. Verfahren zur Erzeugung einzelner gerollter Glasplättchen, wobei das Verfahren umfaßt:
- Befüllen einer Ausnehmung (4; 24; 74) einer Form (2; 20; 70) mit einer bestimmten Menge geschmolzenen Glases (6; 26; 76);
- Halten des geschmolzenen Glases (6; 26; 76) in der Ausnehmung (4; 24; 74) so, daß das geschmolzene Glas (6; 26; 76) die Form der Ausnehmung (4; 24; 74) annimmt, wobei die Form der Ausnehmung (4; 24; 74) angepaßt ist, um dem geschmolzenen Glas (6; 26; 76) eine längliche Form mit einem Querschnitt zu verleihen, der im wesentlichen von konstanter Fläche ist;
wobei das Befüllen und das Halten unter Bedingungen derart durchgeführt wird, daß das geschmolzene Glas (6; 26; 76) nicht die Innenoberfläche (3; 23; 73) der Höhlung (4; 24; 74) benetzt;
- Überführen wenigstens eines Teils des geschmolzenen Glases (6; 26; 76) aus der Ausnehmung (4; 24; 74) zu einer Ausrollstation, umfassend wenigstens ein Rollenset (30 + 32); und
- Ausrollen des überführten geschmolzenen Glases (82) mittels des wenigstens einen Rollensets (30 + 32);
wobei die Überführung und das Rollen so umgesetzt werden, daß eine nahezu konstante Menge des geformten Materials über die gesamte Länge des Rollens ausgerollt wird.

2. Verfahren nach Anspruch 1, **dadurch gekennzeichnet, daß** die Ausnehmung (24; 74) mit wenigstens einem Strom geschmolzenen Glases (26) oder mit wenigstens einem Grobglas gefüllt wird.

3. Verfahren nach Anspruch 1 oder 2, **dadurch gekennzeichnet, daß** wenigstens die Innenoberfläche (3) der Ausnehmung (4), aus einem Material gemacht wird, das nicht durch das geschmolzene Glas (6) benetzbar ist.

4. Verfahren nach Anspruch 3, **dadurch gekennzeichnet, daß** das Material aus hexagonalem Bornitrid (BN) besteht.

5. Verfahren nach einem der Ansprüche 1 bis 4, **dadurch gekennzeichnet, daß** ein Gasfilm (44) zwischen der Innenoberfläche (23; 73) der Ausnehmung (24; 74) und dem geschmolzenen Glas (26; 76) ausgebildet wird.

6. Verfahren nach Anspruch 5, **dadurch gekennzeichnet, daß** das Gas, das zur Ausbildung des Gasfilms (44) in der Lage ist, über Kanäle abgegeben wird, die in der Dicke der Form (20; 70) vorgesehen sind oder über die offenen Poren eines porösen Materials, das die Form (20; 70) bildet.

7. Verfahren nach Anspruch 6, **dadurch gekennzeichnet, daß** das poröse Material, das die Form (20; 70) bildet, gewählt ist aus: Nickel, Edelstählen, Graphiten und Keramiken.

8. Verfahren nach einem der Ansprüche 1 bis 7, **dadurch gekennzeichnet, daß** die Form (70) aus wenigstens zwei Teilen besteht, die geeignet sind, an wenigstens einem Teil ausgebildet zu sein, **dadurch**, daß die Form (70) über einem Rollenpaar (30 + 32) angeordnet wird, und daß das geschmolzene Glas (76), das in der Höhlung (74) in der Form (70) gehalten wird, zu den Rollen (30 + 32) durch wenigstens teilweises Trennen von wenigstens zweien der Bestandteile der Form (70) überführt wird.

9. Verfahren nach einem der Ansprüche 1 bis 7, **dadurch gekennzeichnet, daß** die Ausnehmung (24) der Form (20) von länglicher Form ist und, daß die Form (20) auf einer Ebene höher als die Ebene des Rollenpaares (30 + 32) angeordnet wird und daß das geschmolzene Glas (26), das in der Ausnehmung (24) der Form (20) gehalten wird, überführt wird auf die Rollen (30 + 32) durch Kippen der Form (20) um eine Achse parallel zu ihrer Längsrichtung.

10. Verfahren nach einem der Ansprüche 1 bis 9, **dadurch gekennzeichnet, daß** es weiterhin umfaßt:
Formen des resultierenden Blattes von Scheibenglas.

11. Vorrichtung zur Erzeugung von einzelnen gerollten Glasplättchen, wobei die Vorrichtung umfaßt:
- eine Abgabevorrichtung (10 + 12; 60 + 72) zur Abgabe geschmolzenen Glases (6; 26; 76), unmittelbar;
- eine Form (2; 20; 70), die eine Ausnehmung (4; 24; 74) zum Aufnehmen und Enthalten geschmolzenen Glases (6; 26; 76) aufweist, das durch die Abgabevorrichtung (10 + 12; 60 + 72) abgegeben wird, wobei die Form der Ausnehmung (4; 24; 74) angepaßt ist, um dem geschmolzenen Glas (6; 26; 76) eine längliche Form mit einem Querschnitt zu verleihen, der im wesentlichen mit konstanter Fläche ist, und wobei die Innenfläche (3; 23; 73) der Ausnehmung (4; 24; 74) nicht durch das geschmolzene Glas (6; 26; 76) benetzt wird; wobei die Form (2; 20; 70) mit Mitteln zum Überführen wenigstens eines Teils des geschmolzenen Glases (6; 26; 76) von der Ausnehmung (4; 24; 74) zu einer Rollstation ausgestattet ist; und
- die Rollstation wenigstens ein Rollenset (30 + 32) umfaßt, zwischen welchem das überführte geschmolzene Glas (82) in ein Blatt aus Glas ausgerollt wird;
wobei die Mittel zum Überführen und das wenigstens eine Set oder die Rollen (30 + 32) zur Implementierung des Rollens über eine fast konstante Menge geschmolzenen Glases (82) entlang der gesamten Länge des Rollens angepaßt sind.

12. Vorrichtung nach Anspruch 11, **dadurch gekennzeichnet, daß** die Innenoberfläche (3) der Ausnehmung (4) der Form (2) aus einem Material gemacht ist, das nicht durch das geschmolzene Glas (6) benetzbar ist.

13. Vorrichtung nach Anspruch 11 oder Anspruch 12, **dadurch gekennzeichnet, daß** die Form (20; 70) umfaßt und/oder zugeordnet ist zu Mitteln (42), die geeignet sind zur Ausbildung eines Gasfilms (44) auf ihrer Innenoberfläche (23; 73).

14. Vorrichtung nach Anspruch 13, **dadurch gekennzeichnet, daß** die Form (20; 70) verbunden ist mit einer Druckgasquelle und daß das Gas durch die Dicke der Form (20; 70) durch Kanäle gezwungen wird, die in der Dicke ausgebildet sind oder über die offenen Poren eines porösen Materials, das die Form (20; 70) bildet.

15. Vorrichtung nach Anspruch 14, **dadurch gekennzeichnet, daß** das poröse Material, das die Form (20; 70) bildet, gewählt ist aus: Nickel, Edelstählen, Graphiten und Keramiken.

16. Vorrichtung nach einem der Ansprüche 11 bis 15, **dadurch gekennzeichnet, daß** die Form (70) aus wenigstens zwei Teilen besteht, die geeignet sind, voneinander wenigstens teilweise zur Überführung des geschmolzenen Glases (76) getrennt zu werden und **dadurch**, daß die Form über einem Rollenpaar (30 + 32) der Rollstation angeordnet ist.

17. Vorrichtung nach einem der Ansprüche 11 bis 15, **dadurch gekennzeichnet, daß** die Form (20) auf einer Ebene höher als die Ebene des Rollenpaares (30 + 32) der Rollstation angeordnet ist, eine Ausnehmung (24) von länglicher Form hat und mit Mitteln ausgestattet ist, welche geeignet sind zum Hervorrufen ihrer Neigung um eine Achse parallel zu ihrer langen Abmessung.

18. Vorrichtung nach einem der Ansprüche 11 bis 17, **dadurch gekennzeichnet, daß** sie weiterhin umfaßt:
- eine Vorrichtung zum Formen des Blattes von plattenförmigem Glas, erhalten aus der Rollstation.

## Revendications

1. Procédé de production, à l'unité, de feuilles de verre laminé, comprenant :
- l'alimentation d'une cavité (4 ; 24 ; 74) d'un moule (2 ; 20 ; 70) en une quantité déterminée de verre fondu (6 ; 26 ; 76) ;
- le maintien dudit verre fondu (6 ; 26 ; 76) dans ladite cavité (4 ; 24 ; 74) de sorte que ledit verre fondu (6 ; 26 ; 76) épouse la forme de ladite cavité (4 ; 24 ; 74) ; ladite forme de ladite cavité (4 ; 24 ; 74) étant adaptée pour conférer audit verre fondu (6 ; 26 ; 76) une forme allongée dont la section transversale présente une surface sensiblement constante ;
ladite alimentation et ledit maintien étant mis en oeuvre dans des conditions telles que ledit verre fondu (6 ; 26 ; 76) ne mouille pas la surface interne (3 ; 23 ; 73) de ladite cavité (4 ; 24 ; 74) ;
- le transfert d'au moins une partie dudit verre fondu (6 ; 26 ; 76) de ladite cavité (4 ; 24 ; 74) vers un poste de laminage comprenant au moins un ensemble de rouleaux (30 + 32) ; et
- le laminage dudit verre fondu transféré (82) à l'aide d'au moins ledit ensemble de rouleaux (30 + 32) ;
ledit transfert et ledit laminage étant mis en oeuvre de sorte qu'une quantité quasi constante de matériau mis en forme est laminé sur toute la longueur de laminage.

2. Procédé selon la revendication 1, **caractérisé en ce que** ladite cavité (24 ; 74) est alimentée par au moins une coulée de verre fondu (26) ou par au moins une paraison de verre (76).

3. Procédé selon l'une des revendications 1 ou 2, **caractérisé en ce qu'**au moins la surface interne (3) de ladite cavité (4) est en un matériau non mouillable par ledit verre fondu (6).

4. Procédé selon la revendication 3, **caractérisé en ce que** ledit matériau consiste en du nitrure de bore (BN) hexagonal.

5. Procédé selon l'une quelconque des revendications 1 à 4, **caractérisé en ce qu'**un film de gaz (44) est ménagé entre la surface interne (23 ; 73) de ladite cavité (24 ; 74) et ledit verre fondu (26 ; 76).

6. Procédé selon la revendication 5, **caractérisé en ce que** le gaz utile à la formation dudit film de gaz (44) est délivré *via* des canaux ménagés dans l'épaisseur dudit moule (20 ; 70) ou *via* la porosité ouverte du matériau poreux constitutif dudit moule (20 ; 70).

7. Procédé selon la revendication 6, **caractérisé en ce que** ledit matériau poreux constitutif dudit moule (20 ; 70) est choisi parmi le nickel, les aciers inoxydables, les graphites et les céramiques.

8. Procédé selon l'une quelconque des revendications 1 à 7, **caractérisé en ce que** ledit moule (70) est constitué d'au moins deux parties, susceptibles d'être au moins en partie désolidarisées, **en ce que** ledit moule (70) est positionné au-dessus d'une paire de rouleaux (30 + 32) et **en ce que** le verre fondu (76) maintenu dans la cavité (74) dudit moule (70) est transféré vers lesdits rouleaux (30 + 32) par désolidarisation au moins partielle d'au moins deux des parties constitutives dudit moule (70).

9. Procédé selon l'une quelconque des revendications 1 à 7, **caractérisé en ce que** ladite cavité (24) dudit moule (20) présente une forme allongée, **en ce que** ledit moule (20) est positionné à un niveau supérieur à celui d'une paire de rouleaux (30 + 32) et **en ce que** le verre fondu (26) maintenu dans ladite cavité (24) dudit moule (20) est transféré vers lesdits rouleaux (30 + 32) par basculement dudit moule (20) autour d'un axe parallèle à sa plus grande dimension.

10. Procédé selon l'une quelconque des revendications 1 à 9, **caractérisé en ce qu'**il comprend en outre :
- le moulage de la feuille de verre laminé obtenue.

11. Dispositif de production, à l'unité, de feuilles de verre laminé, comprenant :
- un dispositif de délivrance (10 + 12 ; 60 + 72), en discontinu, de verre fondu (6 ; 26 ; 76);
- un moule (2 ; 20 ; 70) présentant une cavité (4 ; 24 ; 74) destinée à recevoir et contenir ledit verre fondu (6 ; 26 ; 76) délivré par ledit dispositif de délivrance (10 + 12 ; 60 + 72), la forme de ladite cavité (4 ; 24 ; 74) étant adaptée pour conférer audit verre fondu (6 ; 26 ; 76) une forme allongée dont la section transversale présente une surface sensiblement constante et la surface interne (3 ; 23 ; 73) de ladite cavité (4 ; 24 ; 74) dudit moule (2 ; 20 ; 70) n'étant pas mouillée par ledit verre fondu (6 ; 26 ; 76) ; ledit moule (2 ; 20 ; 70) étant équipé de moyens pour transférer au moins une partie dudit verre fondu (6 ; 26 ; 76) de ladite cavité (4 ; 24 ; 74) à un poste de laminage ; et
- ledit poste de laminage comprenant au moins un ensemble de rouleaux (30 + 32) entre lesquels ledit verre fondu transféré (82) est laminé en une feuille de verre ; lesdits moyens de transfert et ledit au moins un ensemble de rouleaux (30 + 32) étant adaptés pour mettre en oeuvre le laminage sur une quantité quasi constante de verre fondu (82) sur toute la longueur de laminage.

12. Dispositif selon la revendication 11, **caractérisé en ce qu'**au moins la surface interne (3) de ladite cavité (4) dudit moule (2) est en un matériau non mouillable par ledit verre fondu (6).

13. Dispositif selon la revendication 11 ou 12, **caractérisé en ce que** ledit moule (20 ; 70) comporte et/ou est associé à des moyens (42) aptes à former un film de gaz (44) à sa surface interne (23 ; 73).

14. Dispositif selon la revendication 13, **caractérisé en ce que** ledit moule (20 ; 70) est relié à une source de gaz sous pression et **en ce que** ledit gaz est forcé au travers de l'épaisseur dudit moule (20 ; 70) *via* des canaux ménagés dans ladite épaisseur ou *via* la porosité ouverte du matériau poreux constitutif dudit moule (20 ; 70).

15. Dispositif selon la revendication 14, **caractérisé en ce que** ledit matériau poreux constitutif dudit moule (20 ; 70) est choisi parmi le nickel, les aciers inoxydables, les graphites et les céramiques.

16. Dispositif selon l'une quelconque des revendications 11 à 15, **caractérisé en ce que** ledit moule (70) est constitué d'au moins deux parties, susceptibles d'être au moins en partie désolidarisées pour le transfert du verre fondu (76) et **en ce qu'**il est positionné au-dessus d'une paire de rouleaux (30 + 32) du poste de laminage.

17. Dispositif selon l'une quelconque des revendications 11 à 15, **caractérisé en ce que** ledit moule (20), positionné à un niveau supérieur à celui d'une paire de rouleaux (30 + 32) du poste de laminage, a une cavité (24) de forme allongée et est équipé de moyens aptes à assurer son basculement autour d'un axe parallèle à sa plus grande dimension.

18. Dispositif selon l'une quelconque des revendications 11 à 17, **caractérisé en ce qu'**il comprend en outre :
- un dispositif de moulage de la feuille de verre laminé obtenue au poste de laminage.
